(19) Europäisches Patentamt

European Patent Office

Office européen des brevets

(11) **EP 2 103 647 B1**

(12) **EUROPEAN PATENT SPECIFICATION**

(45) Date of publication and mention
of the grant of the patent:
**11.04.2012 Bulletin 2012/15**

(21) Application number: **07830820.2**

(22) Date of filing: **30.10.2007**

(51) Int Cl.:
*C08J 9/18* (2006.01)      *C08J 9/228* (2006.01)
*C08K 5/42* (2006.01)      *C08L 23/10* (2006.01)

(86) International application number:
**PCT/JP2007/071086**

(87) International publication number:
**WO 2008/075503 (26.06.2008 Gazette 2008/26)**

(54) **PRE-EXPANDED NONCROSSLINKED POLYPROPYLENE RESIN BEADS AND IN-MOLD EXPANSION MOLDINGS**

VOREXPANDIERTE PERLEN AUS UNVERNETZTEM POLYPROPYLENHARZ UND IN DER FORM EXPANDIERTE FORMKÖRPER

PERLES PRÉ-EXPANSÉES DE RÉSINE DE POLYPROPYLÈNE NON RÉTICULÉE ET MOULAGES PAR EXPANSION DANS LE MOULE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.12.2006 JP 2006342702**

(43) Date of publication of application:
**23.09.2009 Bulletin 2009/39**

(73) Proprietor: **Kaneka Corporation**
**Osaka-shi, Osaka 530-8288 (JP)**

(72) Inventor: **ICHIMURA, Tadayuki**
**Settsu-shi, Osaka 566-0072 (JP)**

(74) Representative: **Vossius & Partner**
**Siebertstrasse 4**
**81675 München (DE)**

(56) References cited:
**JP-A- 2001 328 132      JP-A- 2004 269 854**
**JP-A- 2005 298 769      JP-A- 2006 137 790**

**Description**

Technical Field

The present invention relates to pre-expanded noncrosslinked polypropylene-based resin particles that exhibit an excellent anti-static property, an in mold expansion-molded article obtained from the pre-expanded noncrosslinked polypropylene-based resin particles, and methods for producing the same.

Background Art

Expansion-molded articles obtained from pre-expanded polypropylene-based resin particles are superior in chemical resistance, heat resistance, shock absorption, and distortion restoration rate after compression as compared to expansion-molded articles obtained from pre-expanded polystyrene-based resin particles, and arc also superior in heat resistance and compression strength as compared to expansion-molded products obtained from pre-expanded polyethylene-based resin particles. For this reason, recently such expansion-molded articles have been widely used as cushioning packaging materials, returnable boxes, etc. Pre-expanded polypropylene-based resin particles and expansion-molded articles of the same, however, have a defect of tending to bear electrical charges. Therefore, for products used for packaging electronic components and the like that should be protected against dust and static electricity, expansion-molded articles to which an anti-static property is imparted have been demanded.

Expansion-molded articles obtained from pre-expanded polypropylene-based resin particles sometimes are hereinafter referred to simply as "molded articles of pro-expanded polypropylene-based resin particles".
As a method for imparting an anti-static property to molded articles of pre-expanded polypropylene-based resin particles, generally known is a method in which a stearic acid ester of glycerol as an anti-static agent is kneaded into a polypropylene-based resin (Patent Document 1), and a method in which an alkyl amine-based additive is kneaded thereinto (Patent Document 2). However, with these methods, it is difficult to obtain pre-expanded particles having an excellent anti-static property expressed as a surface specific resistance of $1\times10^{11}\Omega/cm^2$ or less. In the case where a noncrosslinked polypropylene-based resin is used as a substrate resin, the anti-static agent migrates to the surface of the pre-expanded particles, whereby the fusion among expanded particles upon hot-molding is impaired. Further, there also arises a problem of contamination, which occurs when the anti-static agent having migrated to the surface of the expanded particles adheres to articles that are packaged.

As a method for reducing the contamination by suppressing the migration of an anti-static agent onto the surface molded article, a crosslinked polyolefin-based expanded article has been proposed, which is obtained by adding 0.5 to 4.0 parts by weight of an alkali metal salt of a fluoroalkylsulfonic acid with respect to 100 parts by weight of a polyolefin-based resin while also adding a foaming agent and a crosslinking agent, kneading and heating the mixture thus obtained, so that the mixture is expanded (Patent Document 3). This technique is intended to crosslink a polyolefin-based resin as a substrate resin, so as to suppress the migration of the anti-static agent to the surface of an expansion-molded article. Therefore, an effect with respect to a noncrosslinked polypropylene-based resin cannot be expected. Besides, the disclosed expanded articles are those obtained by filling an expandable resin composition in a mold and expanding the same. Therefore, it is doubtful whether the technique is effective in the case where it is applied to pre-expanded particles.

[Patent Document 1] JP 62(1987)-153326 A
[Patent. Document 2] JP 50(1975)-29740 B
[Patent Document 3] JP 2005-330417 A

Disclosure of Invention

Problems to be solved by the Invention

It is an object of the present invention to provide pre-expanded noncrosslinked polypropylene-based resin particles that allow for the production of in-mold expansion molded articles that exhibit an excellent anti-static property and are less contaminating: an in-mold expansion-molded article obtained from the foregoing pre-expanded particles; and methods for manufacturing the same.

The inventor of the present invention made serious studies in view of the above-described problems, and as a result found that pre-expanded particles having an excellent anti-static property can be obtained without impairment of the foaming property and the fusion property, by causing a noncrosslinked polypropylene-based resin to contain an ion-conducting polymer-type anti-static agent that is made of an amphiphilic block copolymer and contains an alkali metal salt of a fluoroalkylsulfonic acid; and that a molded article obtained from the foregoing pre-expanded particles exhibits an excellent anti-static property that could solve the above-described problems. Thus, the inventor completed the present invention.

A first aspect of the present invention relates to pre-expanded noncrosslinked polypropylene-based resin particles comprising a noncrosslinked polypropylene-based resin composition that contains 1 percent by weight (wt%) to 30 wt% of an ion-conducting polymer-type anti-static agent that is made of an amphiphilic block copolymer and contains an alkali metal salt of a fluoroalkylsulfonic acid.

The foregoing aspect preferably relates to the following:

(1) the pre-expanded noncrosslinked polypropylene-based resin particles described above, wherein a hydrophobic part of the amphiphilic block copolymer is an olefin-based polymer, and a hydrophilic part of the same is an ether-based polymer:

(2) the pre-expanded noncrosslinked polypropylene-based resin particles described above, wherein the alkali metal salt of a fluoroalkylsulfonic acid is expressed by the following formula (1) or (2):

$$(CF_3SO_2)_2NLi \qquad (1)$$

$$CF_3SO_3Li \qquad (2);$$

(3) the pre-expanded noncrosslinked polypropylene-based resin particles described above, wherein the ion-conducting polymer-type anti-static agent contains the alkali metal salt of a fluoroalkylsulfonic acid at a ratio of 0.01 to 50 parts by weight, with respect to 100 parts by weight of the amphiphilic block copolymer; and

(4) the pre-expanded noncrosslinked polypropylene-based resin particles described above, wherein a DSC ratio obtained by differential scanning calorimetry (DSC) is in a range of 10 % to 70 %, the DSC ratio being expressed by the following formula (3):

$$DSC \; ratio \; (\%) = 100 \times (\beta/(\alpha+\beta)) \; ... \; (3)$$

where $\alpha$ (J/g) is the amount of heat of fusion at a fusion peak based on crystal that the substrate resin of the pre-expanded noncrosslinked polypropylene-based resin particles had inherently, and $\beta$ (J/g) is the amount of heat of fusion at a fusion peak appearing on a higher temperature side relative to the peak for $\alpha$.

A second aspect of the present invention relates to the following:

a method for producing an in-mold expansion-molded article of a noncrosslinked polypropylene-based resin, the method comprising the step of filling the pre-expanded noncrosslinked polypropylene-based resin particles described above into a mold capable of being closed but incapable of being hermetically sealed, and heating the same with water vapor so that the particles are molded; and

an in-mold expansion-molded article of a noncrosslinked polypropylene-based resin obtained by the above-described method.

Effect of the Invention

With the present invention, pre-expanded polypropylene-based resin particles can be obtained, which exhibit an excellent foaming property, and an excellent fusibility when they are formed into an in-mold expansion-molded article.

Further, an in-mold expansion-molded article made of a noncrosslinked polypropylene-based resin, which is obtained from the pre-expanded noncrosslinked polypropylene-based resin particles of the present invention, exhibits an excellent anti-static 3C property independent from the ambient environment, and is much less contaminating.

Brief Description of Drawings

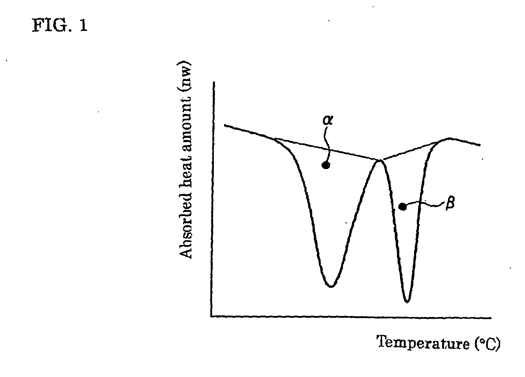

[FIG. 1] FIG. 1 schematically illustrates a DSC chart of pre-expanded noncrosslinked polypropylene-based resin particles of the present invention.

Detailed Description of the Invention

Pre-expanded noncrosslinked polypropylene based resin particles of the present invention are made of a noncrosslinked polypropylene-based resin composition that contains 1 wt% to 30 wt% of an ion-conducting polymer-type anti-static agent that is made of an amphiphilic block copolymer and contains an alkali metal salt of a fluoroalkylsulfonic acid.

It is preferable that the amphiphilic block copolymer has a structure such that hydrophilic polymer segments (hydrophilic parts) and hydrophobic polymer segments (hydrophobic parts) are arranged alternately and bonded with one another, and that the hydrophobic part is an olefin-based polymer while the hydrophilic part is an ether-based polymer.

Examples of the olefin forming the foregoing olefin-based polymer in the foregoing amphiphilic block copolymer include olefins having two to six carbon atoms, such as ethylene, propylene, 1-butene, 1-pentene, and 1-hexene. Among these olefins, atleastone selected from ethylene and propylene is preferred, and it is particularly preferable that propylene is included. The ratio of propylene in the olefins composing the olefin-based polymer preferably is not less than 50 mol%, more preferably not less than 70 mol%, and further preferably not less than 90 mol%. The number-average molecular weight of the olefin-based polymer typically is about 500 to 50000, preferably 1000 to 40000, and more preferably 2000 to 20000.

As the monomer composing the ether-based polymer in the amphiphilic block copolymer, for example, alkylene oxides having two to four carbon atoms are preferable, such as ethylene oxide, propylene oxide, and butylene oxide. Among these, alkylene oxides having two to three carbon atoms such as ethylene oxide and propylene oxide are preferable. Examples of the preferable ether-based polymer composed of such monomers include polyalkylene oxides composed of alkylene oxides having two to three carbon atoms, such as polyethylene oxide, polypropylene oxide, and polyethylene oxide-polypropylene oxide. The degree of polymerization of the ether-based polymer preferably is 1 to 300, more preferably 10 to 150, and further preferably 10 to 100.

The olefin-based polymers and the ether-based polymers are bonded with one another via chemical bonds such as ester bonds, amide bonds, ether bonds, urethane bonds, and imide bonds, thereby becoming an amphiphilic block copolymer. These bonds can be formed by for example, introducing the hydrophilic parts after denaturing a polyolefin with a denaturing agent. For example, the hydrophilic parts are introduced by denaturing a polyolefin with a denaturing agent so that active hydrogen atoms are introduced, and thereafter performing addition polymerization of hydrophilic monomers such as alkylene oxide.

Examples of such a denaturing agent include unsaturated carboxylic acids and anhydrides of the same such as maleic acid and maleic anhydride; lactams such as caprolactam or aminocarboxylic acids; oxygen or ozone; hydroxylamines such as 2-aminoethanol; diamines such as ethylenediamine; and mixtures of these.

The number-average molecular weight of the amphiphilic block copolymer of the present invention preferably is 1000 to 100000, more preferably 2000 to 80000, and further preferably 3000 to 40000.

The ion-conducting polymer-type anti-static agent of the present invention contains an alkali metal salt of a fluoroalkylsulfonic acid. The following can be presumed: in the noncrosslinked polypropylene-based resin composition of the present invention, metal ions dissociated from the alkali metal salt act on the hydrophilic parts of the amphiphilic block copolymer, thereby exhibiting ionic conduction, which results in the exhibition of an excellent anti-static property.

Examples of the alkali metal salt of a fluoroalkylsulfonic acid include alkali metal salts of trifluoromethanesulfonic acids such as lithium trifluoromethanesulfonate, and sodium trifluoromethanesulfonate; alkali metal salts of bis(trifluoromethanesulfonyl)imides such as lithium bis(trifluoromethanesulfonyl)imide, sodium bis(trifluoromethanesulfonyl)imide, potassium bis(trifluoromethanesulfonyl)imide; and alkali metal salts of tris(trifluoromethanesulfonyl)methides such as lithium tris(trifluoromethanesulfonyl)methide, and sodium tris(trifluoromethanesulfonyl)methide. These alkali metal salts may be used alone or in combination of two or more.

Among these alkali metal salts of fluoroalkylsulfonic acids, lithium salts are preferable, and lithium metal salts having a fluorine atom and a sulfonyl group or a sulfonic acid group arc further preferable, which are, for example, lithium trifluoromethanesulfonate, lithium bis(trifluoromethanesulfonyl)imide, and lithium tris(trifluoromethanesulfonyl)methide. The alkali metal salt of a fluoroalkylsulfonic acid particularly preferably is a lithium salt expressed by the following formula (1) or (2), i.e., lithium bis(trifluoromethanesulfonyl)imide, or lithium trifluoromethanesulfonyl:

$$(CF_3SO_2)_2NLi \qquad (1)$$

$$CF_3SO_3Li \qquad (2)$$

The content of the alkali metal salt of a fluoroalkylsulfonic acid preferably is 0.01 to 50 parts by weight more preferably 0.05 to 20 parts by weight, and further preferably 0.10 to 10 parts by weight, with respect to 100 parts by weight of the amphiphilic block copolymer.

Examples of such an ion-conducting polymer-type anti-static agent include "Sankonol TBX-310", "Sankonol TBX-65", and "Sankonol TBX-35" produced by Sanku Chemical Industry Co., Ltd.

As for the polypropylene-based resin that composes the noncrosslinked polypropylene-based resin composition of the present invention, its composition and its synthesizing method are not limited particularly, as long as the polypropylene-based resin contains propylene as monomers at a ratio of not less than 80 wt%, more preferably, not less than 85 we%, and further preferably, not less than 90 wt%. Examples of the polypropylene-based resin include propylene homopolymer, ethylene-propylene random copolymer, propylene-butene random copolymer, ethylene-propylene block copolymer, ethylene-propylene-butene ternary copolymer, as well as denatured products of these. It should be noted that these polypropylene-based resins can be produced by any of usually known methods, that is, the vapor phase polymerization method such as the BASS method using a $MgCl_2$-supported catalyst, the AMDCD method, the UCC method, and the HYPOL method, as well as the method using highly active metallocene catalyst, the conventional-type method using $TiCl_3$ catalyst, and the like.

In the present invention, "noncrosslinked" can be defined as the following. A sample of 1 g per 100 g of xylene is immersed in boiling xylene for eight hours, and immediately filtered with a wire mesh with a clearance of 74 $\mu$m between wires. Portions insoluble in boiling xylene, left on the wire mesh, are weighed. In the case where the ratio of the insoluble portions with respect to the original sample is not more than 10 wt%, the sample is referred to as being "noncrosslinked" in the present invention.

Beside, a synthetic resin other than the polypropylene-based resin may be added to such an extent that the effect of the present invention is not impaired. Examples of the synthetic resin other than the polypropylene-based resin include ethylene-based resins such as high-density polyethylene, medium-density polyethylene, low-density polyethylene, linear low-density polyethylene, linear ultra-low-density polyethylene, ethylene-vinyl acetate copolymer, ethylene-acrylic acid copolymer, and ethylene-methacrylic acid copolymer; and styrene-based resins such as polystyrene, and styrene-maleic anhydride copolymer.

The melting point of the polypropylene-based resin composition of the present, invention is not limited particularly, but it preferably is in a range of 130˚C to 1.70˚C both inclusive, more preferably in a range of 135˚C; to 160˚C both inclusive, and further preferably in a range of 140˚C to 150˚C both inclusive.

A melt index of the polypropylene-based resin composition in the present invention is not limited particularly as long as it falls in such a range that pre-expanded particles can be produced, and the melt index preferably is in a range of 0.2 g/10min to 50 g/10min both inclusive, more preferably in a range of 1 g/10min to 30 g/10min both inclusive, and further preferably in a range of 3 g/10min to 12 g/10min both inclusive. If the melt index is in the foregoing range, pre-expanded particles having excellent dimensional stability and excellent surface properties can be obtained. If the melt index is less than 0.2 g/10min, the polypropylene-based resin composition has a too high melting viscosity which tends to make it difficult to obtain pre-expanded particles that are highly expanded. If the melt index is more than 50 g/10min, the polypropylene-based resin composition has a too low melting viscosity relative to the stretch of the resin upon expansion, and bubbles thereof tend to break. The melt index can be adjusted by, for example, using an organic peroxide.

In the present invention, any of the following agents may be added as required in such a range that the effect of the present invention is not impaired, so that the polypropylene-based resin composition is obtained: not only cell nucleating agents such as talc, but also stabilizers such as antioxidant, metal deactivators, phosphorus-based processing stabilizers, ultraviolet absorbers, ultraviolet stabilizers, fluorescent brightening agents, and metallic soaps; crosslinking agents; chain transfer agents; lubricants; plasticizers; fillers; reinforcers; pigments; dyes; flame retardants; anti-static agents; and the like.

A method for adding an ion-conducting polymer-type anti-static agent to the polypropylene-based resin composition is not limited particularly and usually melt kneading is used. For example, a dry blend of an ion-conducting polymer-type anti-static agent and a polypropylene-based resin is molten and kneaded with an extruder. Alternatively, a master batch pellet may be prepared separately in which a polypropylene-based resin containing an ion-conducting polymer-type anti-static agent at a high concentration, which is manufactured by melting and kneading the foregoing two, is used as a substrate resin, and this master batch pellet and a polypropylene-based resin that does not contain the foregoing ion-conducting polymer-type anti-static agent may be mixed, and subsequently molten and kneaded.

The weight per particle of the pre-expanded noncrosslinked polypropylene-based resin particles of the present invention typically is 0.1 mg to 2.0 mg, and preferably 0.7 mg to 1.3 mg.

As a method for expanding the noncrosslinked polypropylene-based resin particles into pre-expanded particles, for example, the following method can be used. The noncrosslinked polypropylene-based resin particles are dispersed, along with a volatile foaming agent, in water within a pressure-resistant container, and the dispersion thus obtained is heated to a temperature in a range from a temperature 20˚C lower than the melting point, of the noncrosslinked polypropylene-based resin to a temperature 20˚C higher than the foregoing melting point, so that the noncrosslinked polypropylene-based resin particles are impregnated with the foaming agent. Then, while the temperature and the pressure in the container is maintained at a constant level under a pressure higher than the vapour pressure that the foaming agent exhibits, the dispersion of the noncrosslinked polypropylene-based resin particles and water is discharged into an atmosphere having a pressure lower than that in the container.

To prepare the dispersion, it is preferable to use an inorganic dispersant and a dispersing assistant. Examples of the dispersant include calcium phosphate, magnesium phosphate, basic magnesium carbonate, barium sulfate, calcium carbonate, aluminum oxide, titanium oxide, basic zinc carbonate, iron oxide, as well as natural or synthetic clay minerals such as kaolin, mica, and clay. Examples of the dispersing assistant include sodium dodecylbenzenesulfonate, sodium n-paraffinsulfonate, sodium α-olefinsulfonate, magnesium chloride, magnesium nitrate, magnesium sulfate, aluminum chloride, aluminum nitrate, aluminum sulfate, iron chloride, iron sulfate, and iron nitrate.

It is preferable to use, among the foregoing, either calcium phosphate or magnesium phosphate, and sodium n-paraffinsulfonate in combination. Amounts of the dispersant and the dispersing assistant vary with the types thereof, the type of the resin used and the amount of the same, but normally it is preferable to add 0.2 to 3 parts by weight of the dispersant with respect to 100 parts by weight of water, while adding 0.001 to 0.1 parts by weight of the dispersing assistant. Besides, in order to improve the dispersion of the noncrosslinked polypropylene-based resin particles in water, it is usually preferable that the noncrosslinked polypropylene-based resin particles are used at a ratio of 20 to 100 parts by weight with respect to 100 parts by weight of water.

Examples of the foaming agent include organic physical foaming agents having a boiling point in a range of -50˚C to 120˚C inorganic gases; and water. Examples of the organic physical foaming agents include aliphatic hydrocarbons such as propane, butane, pentane, hexane, and heptane; alicyclic hydrocarbons such as cyclobutane and cyclohexane; and halogenated hydrocarbons such as dichlorodifluoromethane, dichlorotetrafluoroethane, trichlorotrifluoroethane, methyl chloride, methylene chloride, ethyl chloride, chlorofluoromethane, trifluoromethane, 1,2-difluoroethane, and 1,2,2,2-tetrafluoroethane. Examples of the inorganic gases include nitrogen, oxygen, air, and carbon dioxide. These foaming agents can be used alone or in combination of two or more. The amount of the foaming agent used is not limited, and may be set by taking into consideration the type of the foaming agent, and the ratio of the amount of the resin in the pressure-resistant container to the capacity of the container. This amount preferably is 5 to 50 parts by weight with respect to 100 parts by weight of the noncrosslinked polypropylene-based resin particles.

When water is used as a foaming agent, it is preferable that one or more chemical compounds of hydrophilic polymers and chemical compounds having triazine skeletons are added as a foaming assistant to the polypropylene-based resin composition. Examples of the hydrophilic polymer to be added as a foaming assistant include polymers containing carboxyl groups, such as ethylene-acrylic acid-maleic anhydride ternary copolymer, ethylene-(meth)acrylic acid copolymer, and ionomer resins each of which is obtained by crosslinking an ethylene-(meth)acrylic acid copolymer with a metal ion. These may be used alone or in combination of two or more. Ethylene-based ionomer resins each of which is obtained by crosslinking an ethylene-(meth)acrylic acid copolymer with an alkali metal ion such as sodium ion, potassium ion, or lithium ion are preferable in particular, since they provide an excellent water content, and impart an excellent foaming property. Ethylene-based ionomer resins each of which is obtained by crosslinking an ethylene-(meth)acrylic acid copolymer with potassium ion arc more preferable, since they provide a greater average cell diameter.

It should be noted that in the above descriptions"... (meth)acrylic acid ..." means "... acrylic acid ... and/or... methacrylic acid ...".

The amount of the hydrophilic polymer used varies with the type of the hydrophilic polymer, and is not limited particularly. However, the amount preferably is in a range of 0.01 part by weight to 20 parts by weight both inclusive, and more preferably in a range of 0.5 part by weight to 50 parts by weight both inclusive with respect to 100 parts of the polypropylene-based resin composition. If the amount is less than 0.01 part by weight, it is difficult in some cases to obtain pre-expanded particles having a high expansion ratio. If it exceeds 20 parts by weight, the heat resistance and the mechanical strength decrease significantly in some cases.

As to the compound having triazine skeletons as the foaming assistant, those having a molecular weight of not more than 300 per unit triazine skeleton are preferred. Here, the "molecular weight per unit triazine skeleton" refers to a value obtained by dividing a molecular weight with the number of triazine skeletons contained in one molecule. If the molecular weight per unit triazine skeleton exceeds 300, significant variations occur in the expansion ratio and the cell diameter in some cases. Examples of the chemical compound having a molecular weight of not more than 300 per mit triazine skeleton include melamine (chemical name: 1,3,5-triazine-2,4,6-triamine), ammeline (chemical name: 1,3,5-triazine-2-hydroxy-4,6-diamine), ammelide (chemical name: 1,3,5-triazine-2,4-hydroxy-6-amine), cyanuric acid (chemical name: 1,3,5-triazine-2,4,6-triol), tris(methyl) cyanurate, tris(ethyl) cyanurate, tris(butyl) cyanurate, tris(2-hydroxyethyl) cyanurate, and melamine-isocyanuric acid condensation product. These may be used alone or in combination of two or more. Among these, melamine, isocyanuric acid, or melamine-isocyanuric acid condensation product preferably is used in order to obtain pre-expanded particles having a high expansion ratio, with less variations in the expansion ratio and the cell diameter.

The amount used therein of the chemical compound having the triazine skeletons varies with the type, and is not limited particularly. However, the amount preferably is in a range of 0.001 part by weight to 10 parts by weight both inclusive, and more preferably in a range of 0.01 part by weight to 1 part by weight both inclusive, with respect to 100 parts by weight of the polypropylene-based resin composition. If the amount is less than 0.001 part by weight, it is difficult in some ca ses to obtain pre-expanded particles having a high expansion ratio. If the amount exceeds 1 part by weight, the heat resistance and the mechanical strength decrease significantly in some cases.

The expansion ratio of the pre-expanded noncrosslinked polypropylene-based resin particles thus obtained is not limited particularly, and preferably is in a range of 5 times to 40 times both inclusive, and more preferably in a range of 8 times to 20 times both inclusive.

Alternatively, two-stage pre-expanded particles having an expansion ratio of 50 times or more may be obtained by a two-stage expansion method or the like. The two-stage expansion method is carried out as follows. Pre-expanded particles having an expansion ratio in a range of 5 times to 35 times both inclusive are produced first, and then the pressure within the pre-expanded particles is increased as compared with the normal pressure by a pressurizing treatment in which the particles are introduced into a sealed container so that the particles are impregnated with nitrogen, air, or the like. Thereafter, the expanded particles are heated with steam so as to be further expanded.

The pre-expanded noncrosslinked polypropylene-based resin particles preferably have a cell diameter in a range of 50 $\mu$m to 800 $\mu$m, more preferably in a range of 100 $\mu$m to 500 $\mu$m both inclusive, and further preferably in a range of 150 $\mu$m to 300 $\mu$m both inclusive. In the case where the cell diameter is in this range, the stretch of the pre-expanded particles is excellent when being subjected to in-mold expansion molding, whereby an expansion-molded article having an excellent surface appearance can be obtained.

The pre-expanded noncrosslinked polypropylene-based resin particles of the present invention have a DSC ratio obtained by differential scanning calorimetry (DSC), preferably in a range of 10 % to 70 %, more preferably in a range of 1.5 % to 50 %, and further preferably in a range of 20% to 30 %.

Fusion peaks are considered that appear when 4 mg to 10 mg of the pre-expanded noncrosslinked polypropylene-based resin particles are heated in a manner such that the temperature thereof rises from 40˚C to 200˚C at a rate of 10˚C/min, and the amount of heat of fusion at a fusion peak based on crystal that the substrate resin of the pre-expanded noncrosslinked polypropylene-based resin particles had inherently is assumed to be $\alpha$ (J/g); and the amount of heat of fusion at, among the foregoing peaks, a fusion peak appearing on a higher temperature side relative to the above-described peak is assumed to be $\beta$ (J/g). Then, the DSC ratio referred to herein is a ratio of the amount of heat of fusion at the fusion peak appearing on the higher temperature side to the total amount of heat of fusion, which is expressed as the following formula (3):

$$\text{DSC ratio } (\%) = 100 \times (\beta/(\alpha+\beta)) \dots (3)$$

FIG. 1 schematically illustrates a DSC chart obtained under the above-described conditions.

Such a DSC ratio varies with the temperature and pressure upon expansion when pre-expanded noncrosslinked polypropylene-based resin particles are produced. Therefore, in order to obtain pre-expanded particles having a desired DSC ratio, the expansion temperature and the expansion pressure may be adjusted appropriately. Generally, the DSC ratio tends to decrease as the expansion temperature and the expansion pressure increase. Though depending on the type of the polypropylene-based resin and the type of the foaming agent, more specifically, the DSC ratio decreases about 8 to 15 % as the expansion temperature increases by 1˚C, and the DSC ratio decreases about 5 to 10% as the expansion pressure increases by 0.1 MPa.

An in-mold expansion -molded article of a noncrosslinked polypropylene-based resin of the present invention is obtained with use of the above-described pre-expanded noncrosslinked polypropylene-based resin particles, by filling the particles in a mold capable of being closed but incapable of being hermetically sealed, and heating the same with water vapor so that the particles are molded. A mold actually used has the following dual-wall structure: in order that the above-described mold capable of being closed but incapable of being hermetically sealed can be heated or pressurized from surroundings with use of a heating medium such as water vapor, another wall covering an outer circumference of a wall of the mold is provided, with a gap being provided between the wall of the mold and the another wall so as to allow a heating medium to flow on the outer circumferential surface. Such a wall on the outer circumference side usually is configured to be scalable so that the heating medium does not leak into the outside. Such a mold often is used conventionally when an expansion-molded article is produced from pro-expanded particles, and since before, this mold has been referred to as "a mold capable of being closed but incapable of being hermetically sealed".

To form the pro-expanded noncrosslinked polypropylene-based resin particles of the present invention into an in-mold expansion-molded article with use of the above-described mold, the following methods, for example, can be used: A) after expanded particles are subjected to a pressure treatment with an inorganic gas so that the particles are impregnated with the inorganic gas and a predetermined internal pressure is imparted to the particles, the particles are filled in the mold, and are expanded and fused by heating with use of water vapor or the like (e.g. JP 51(1976)-22951 B: corresponding US patent No. 3,953,558); B) expanded particles are compressed by gas pressure and are filled in a mold, and with the recovering power of the expanded particles being utilized, the particles are expanded and fused by heating, with use of water vapor or the like (e.g. JP 53(1978)-33996 B); and further, C) after expanded particles are filled in a mold with a small interstice, the mold is closed and compressed so that the recovering power is imparted to the expanded particles, and the particles are expanded and fused by heating, with use of water vapor or the like. Such a molding vapor pressure preferably is in a range of 1.5 to 4.5 kgf/cm$^2$ (gauge pressure), more preferably 2 to 4 kgf/cm$^2$

(gauge pressure), and further preferably 2 to 3 kgf/cm$^2$ (gauge pressure). If the molding vapor pressure exceeds 4.5 kgf/cm$^2$ (gauge pressure), not only the vapor costs increase, but also the contraction of the molded article occurs in some cases owing to overheating. If the molding vapor pressure is less than 1.5 kgf/cm$^2$ (gauge pressure), the limit of the effect of the present invention is exceeded, and the fusibility tends to be impaired. Thus, by expansion by heating with use of water vapor, an in-mold expansion-molded article can be obtained.

The density of the in-mold expansion-molded article according to the present invention is not limited particularly, and generally it is in a range of 0.015 to 0.150 g/cm$^3$. By adjusting appropriately the expansion ratio of the pre-expanded noncrosslinked polypropylene-based resin particles and the secondary expansion ratio upon the in-mold expansion molding, an in-mold expansion-molded article having a desired density can be obtained.

[Example]

Next, the present invention is described below in more detail based on examples, though the present invention is not limited to these examples alone.

<Surface specific resistance>

A surface specific resistance was measured using a tester manufactured by Mitsubishi Chemical Corporation, named "Hirester MCP", by subjecting a surface of a molded article in a size of 400×300×50mm to measurement, with a voltage of 500 V being applied for 1 minute, in an ambient atmosphere with a measurement temperature of 23˚C and a humidity of 50 %RH, in accordance with JIS K 6911. A lower surface specific resistance means a superior anti-static property.

<Contamination>

The contamination was evaluated by directly touching a molded article with hands. An article that was sticky was evaluated as poor, which is marked as "x", while an article that was not sticky was evaluated as good, which is marked as "○". Besides, after a molded article, on whose surface a glass plate of 100×100×1 mm was placed, was subjected to a heat treatment in an oven at 80˚C for one week, the temperature was changed to room temperature, and contamination adhering to the glass plate was determined. In the case where the glass plate did not have soil, the article was evaluated as good, which is marked as "○", while in the case where it was recognized that something adhered thereto, the article was evaluated as poor, which is marked as "×".

<Measurement, of DSC ratio>

When 4 mg to 10 mg of the pre-expanded resin particles are heated in a manner such that the temperature thereof rises from 40˚C to 200˚C at a rate of 10˚C/mm, the amount of heat of fusion at a fusion peak based on crystal that the substrate resin of the pre-expanded noncrosslinked polypropylene-based resin particles had inherently is assumed to be $\alpha$ (J/g); and the amount of heat of fusion at a fusion peak appearing on a higher temperature side relative to the above-described peak is assumed to be $\beta$(J/g). Then, the DSC ratio referred to herein is a ratio (%) of the amount of heat of fusion at the fusion peak appearing on the higher temperature side to the total amount of heat of fusion, which is expressed as the following formula (3):

$$DSC\ ratio\ (\%) = 100 \times (\beta/(\alpha+\beta)) \dots (3)$$

<Measurement of expansion ratio of pro-expanded particles>

From the weight of pre-expanded particles as a sample and the volume of the sample determined by submerging the sample in ethanol in a measuring flask, the density of the pre-expanded particles was calculated, and the expansion ratio was determined by dividing the density of the substrate resin by the density of the pre-expanded particles.

<In-mold expansion-molding>

Molding was performed using a mold in a rectangular parallelepiped shape of 400 mm in length × 300 mm in width × 50 mm in thickness and an in-mold expansion-molding machine equipped with a pressure sensor capable of detecting the expansion pressure of a molded article in the mold. The mold was closed from a state in which the mold was opened to a state in which an interstice in the thickness direction became 15 mm, and pre-expanded particles were filled therein without flowing out of the mold. Then, the mold was closed so that the interstice of the mold became 0 mm, whereby the pre-expanded particles were compressed. After a molding vapor pressure of 2.5 kgf/cm$^2$ (gauge pressure) was imparted thereto, water cooling was carried out.

When the expansion pressure of the molded article in the mold reached 0.5 kgf/cm$^2$, the mold was removed, whereby an in-mold molded article was obtained.

<Surface stretch of in-mold expansion-molded article>

The surface stretch of each molded article obtained was evaluated according to the following criteria, and acceptability determination was carried out.
○: Molded article in which adjacent pre-expanded particles have few interstices therebetween, and which has few recesses and projections, thereby having an excellent surface appearance.
×: Molded article in which adjacent pre-expanded particles have many interstices therebetween, or which has many recesses and projections, thereby having a poor surface appearance.

<Contraction of in-mold expansion-molded article>

Contraction of a molded article that had been left at room temperature for twelve hours after being molded was evaluated by visual inspection, and acceptability determination was carried out in accordance with the following criteria:
○: No significant contraction accompanied by deformation was observed.
×: Significant contraction accompanied by deformation was observed.

<Fusibility>

Each in-mold molded article was broken (cut and broken), and then, the number of particles subjected particle breakdown (material breakdown) and the number of parties subjected to intergranular breakdown (interface breakdown) on a breakage face were determined by visual inspection. A ratio (%) of particle breakdown with respect to the total number of the foregoing two was assumed to be fusibility; and those having a fusibility of 80 % or more were regarded as acceptable, while those having a fusibility of less than 80 % were regarded as unacceptable. It should be noted that "particle breakdown" refers to a state of breakdown such that when an in-mold molded article is cut and broken, a breakage face extends passing through internal parts of expanded particles, whereas "intergranular breakdown" refers to a state such that breaking occurs along interfaces between expanded particles. Therefore, intergranular breakdown tending to occur means that the fusibility among expanded particles is poor, whereas particle breakdown tending to occur means that the fusibility among expanded particles is excellent.

Production Example 1

A mixture composed of 90 parts by weight of a polyether/polyolefin block copolymer ("Pelestat 300" produced by Sanyo Chemical Industries, Ltd.) and 10 parts by weight of lithium bis(trifluoromethanesulfonyl)imide was mixed with a Henschel mixer. The mixture then was put into a twin-screw extruder, so as to be heated at 200°C, kneaded, and extruded. After being cooled with water, the mixture was pelletized, whereby an ion-conducting polymer-type anti-static agent (A) was obtained.

Production Example 2

An ion-conducting polymer-type anti-static agent (B) was obtained in the same manner as that of Production Example 1 except that lithium bis(trifluoromethanesulfonyl)imide used in Production Example 1 was replaced with lithium trifluoromethanesulfonate.

Example 1

With respect to 100 parts by weight of an ethylene-propylene random copolymer (resin density: 0.90 g/cm$^3$, melt flow index: 4.8 g/10min, crystal melting point 146°C), the following were dry-blended, so that a resin mixture was obtained: 7.5 parts by weight of "Sankonol TBX-310" produced by Sanko Chemical Industry Co., Ltd. (polyether-polyolefin block copolymer containing 10 wt% of lithium salt of fluoroalkylsulfonic acid) as an ion-conducting polymer-type anti-static agent; 0.05 part by weight of powder-form talc; and 0.1 part by weight of calcium stearate. This blended material was extruded at a resin temperature of 240˚C with a 50 mm single-screw extruder equipped with a 1.8 mm-diameter dice. After drawn, the material was cut, whereby pellets, each of which had a weight of 1.2 mg, were obtained.

In a pressure-resistant container having a capacity of 10 L, 4900 g of water, 1550 g of the above-described pellets, 20.2 g of calcium phosphate (produced by Taihei Chemical Industrial Co., Ltd.), and 0.48 g of sodium n-paraffinsulfonate were prepared, and were dispersed. While the dispersion thus obtained was being stirred, 279 kg of isobutane was added thereto, and the mixture was heated to 139.5˚C. Further, isobutane in a gas form was added so that the internal pressure of the pressure-resistant container was adjusted to 1.7 MPa. Subsequently, while the pressure in the pressure-resistant container was maintained with use of gas-form isobutane, the dispersion was discharged into the atmosphere via a round orifice having a diameter of 3.6 mm attached to a rear end of a discharge valve on a lower side of the pressure-resistant container. As a result, pre-expanded particles having an expansion ratio of 13.0 times and a DSC ratio of 30 % were obtained. A molded article obtained by subjecting the pre-expanded particles to in-mold expansion-molding had a surface specific resistance of $3.2 \times 10^{11}$ $\Omega/cm^2$, which is low, and was excellent in both of the surface appearance and the fusibility. The evaluation results thereof are shown in Table 1.

Table 1

| | | | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|---|---|
| Preparation of resin particles | Resin composition / part by weight | Polypropylene resin | 100 | 100 | 100 | 100 | 100 | 100 | 100 | 100 | 100 |
| | | "Sankonol TBX-310" | 7.5 | 10.0 | 15.0 | | | | | | |
| | | Ion-conducting polymer-type anti-static agent (A) | | | | 10.0 | | | | | |
| | | Ion-conducting polymer-type anti-static agent (B) | | | | | 10.0 | | | | |
| | | "MK400" | | | | | | 10.0 | | | |
| | | "IRGASTAT P18" | | | | | | | 10.0 | | |
| | | "ATMER 190" | | | | | | | | 5.0 | |
| | | "ATMER 163" | | | | | | | | | 5.0 |
| | | Talc | 0.05 | 0.05 | 0.05 | 0.05 | 0.05 | 0.05 | 0.05 | 0.05 | 0.05 |
| | | Calcium stearate | 0.10 | 0.10 | 0.10 | 0.10 | 0.10 | 0.10 | 0.10 | 0.10 | 0.10 |
| | Pellet weight (mg) | | 1.2 | 1.2 | 1.2 | 1.2 | 1.2 | 1.2 | 1.2 | 1.2 | 1.2 |
| | Kneading temperature (°C) | | 240 | 240 | 240 | 240 | 240 | 240 | 240 | 240 | 240 |
| Preparation of pre-expanded particles | Composition | Resin particles (g) | 1550 | 1550 | 1550 | 1550 | 1550 | 1550 | 1550 | 1550 | 1550 |
| | | Water (kg) | 4900 | 4900 | 4900 | 4900 | 4900 | 4900 | 4900 | 4900 | 4900 |
| | | Calcium phosphate (g) | 20.2 | 20.2 | 20.2 | 20.2 | 20.2 | 20.2 | 20.2 | 20.2 | 20.2 |
| | | Sodium n-paraffinsulfonate (g) | 0.48 | 0.48 | 0.48 | 0.48 | 0.48 | 0.48 | 0.48 | 0.48 | 0.48 |
| | | Isobutane (kg) | 279 | 279 | 279 | 279 | 279 | 279 | 279 | 279 | 279 |
| | Expansion temperature (°C) | | 139.5 | 139.5 | 139.5 | 139.5 | 139.5 | 139.5 | 139.5 | 139.5 | 139.5 |
| | Expansion pressure (MPa) | | 1.7 | 1.7 | 1.7 | 1.7 | 1.7 | 1.7 | 1.7 | 1.7 | 1.7 |
| Properties of pre-expanded particles | DSC ratio (%) | | 30 | 29 | 29 | 29 | 29 | 28 | 29 | 30 | 30 |
| | Expansion ratio (time) | | 13.0 | 12.5 | 12.0 | 12.5 | 13.5 | 12.0 | 13.0 | 12.5 | 13.0 |
| | Cell diameter (μm) | | 280 | 300 | 300 | 300 | 300 | 200 | 200 | 150 | 150 |
| Anti-static performance | Surface specific resistance of molded article ($\Omega/cm^2$) | | $3.2 \times 10^{11}$ | $4.8 \times 10^{10}$ | $1.2 \times 10^{10}$ | $4.5 \times 10^{10}$ | $5.0 \times 10^{10}$ | $1.1 \times 10^{13}$ | $2.5 \times 10^{12}$ | $2.0 \times 10^{12}$ | $1.8 \times 10^{12}$ |
| Contamination | Stickiness | | O | O | O | O | O | O | O | × | × |
| | Soil on glass plate | | O | O | O | O | O | O | O | × | × |
| Quality of molded article | Surface stretch | | O | O | O | O | O | O | O | × | × |
| | Contraction | | O | O | O | O | O | × | × | × | × |
| | Fusibility | | O | O | O | O | O | × | × | × | × |

## Example 2

Pre-expanded particles having an expansion ratio of 12.5 times and a DSC ratio of 29 % were obtained by the same method as that of Example 1 except that the added amount of "Sankonol TBX-310" was changed to 10.0 parts by weight. A molded article obtained by subjecting the foregoing pre-expanded particles to in-mold expansion-molding had a resistance of 4.8x $10^{10}$ $\Omega/cm^2$, which is low, and was excellent in both of the surface appearance and the fusibility. The evaluation results thereof are shown in Table 1.

## Example 3

Pre-expanded particles having an expansion ratio of 12.0 times and a DSC ratio of 29 % were obtained by the same method as that of Example 1 except that the added amount of "Sankonol TBX-310" was changed to 15.0 parts by weight. A molded article obtained by subjecting the foregoing pre-expanded particles to in-mold expansion-molding had a surface specific resistance of $1.2\times10^{10}$ $\Omega/cm^2$, which is low, and was excellent in both of the surface appearance and the fusibility. The evaluation results thereof are shown in Table 1.

## Example 4

Pre-expanded particles having an expansion ratio of 12.5 times and a DSC ratio of 29 % were obtained by the same method as that of Example 1 except that an ion-conducting polymer-type anti-static agent (A) was used in place of "Sankonol TBX-310" in Example 2. A molded article obtained by subjecting the foregoing pre-expanded particles to in-mold expansion-molding had a surface specific resistance of $4.5\times10^{10}$ $\Omega/cm^2$, which is low, and was excellent in both of the surface appearance and the fusibility. The evaluation results thereof are shown in Table 1.

## Example 5

Pre-expanded particles having an expansion ratio of 13.5 times and a DSC ratio of 29 % were obtained by the same method as that of Example 1 except that an ion-conducting polymer-type anti-static agent (B) was used in place of "Sankonol TBX-310" in Example 2. A molded article obtained by subjecting the foregoing pre-expanded particles to in-mold expansion-molding had a surface specific resistance of $5.0\times10^{10}$ $\Omega/cm^2$, which is low, and was excellent in both of the surface appearance and the fusibility. The evaluation results thereof are shown in Table 1.

## Comparative Example 1

Pre-expanded particles having an expansion ratio of 12.0 times and a DSC ratio of 28 % were obtained by the same method as that of Example 1 except that 10.0 parts by weight of "MK400" (copolymer of low-density polyethylene and methacrylic acid) produced by Du Pont-Mitsui Polychemicals as a polymer-type anti-static agent was added. A molded article obtained by subjecting the foregoing pre-expanded particles to in-mold expansion-molding had a surface specific resistance of $1.1\times10^{13}$ $\Omega/cm^2$, which is high. Besides, since contraction and fusion failure occurred thereto, the molded article had poor surface appearance. The evaluation results thereof are shown in Table 1.

## Comparative Example 2

Pre-expanded particles having an expansion ratio of 13.0 times and a DSC ratio of 29 % were obtained by the same method as that of Example 1 except that 10.0 parts by weight of "TRGASTATP18" (polyether ester amide) produced by Chiba Specialty Chemicals Co., Ltd. as a polymer-type anti-static agent was added. A molded article obtained by subjecting the foregoing pre-expanded particles to in-mold expansion-molding had a surface specific resistance of $2.5\times10^{12}$ $\Omega/cm^2$, which is high. Besides, since contraction and fusion failure occurred thereto, the molded article had poor surface appearance. The evaluation results thereof are shown in Table 1.

## Comparative Example 3

Pro-expanded particles having an expansion ratio of 12.5 times and a DSC ratio of 30 % were obtained by the same method as that of Example 1 except that 5.0 parts by weight of "ATMER190" (glycerol monostearate) produced by Chiba Specialty Chemicals Co., Ltd. as an anti-static agent was added. A molded article obtained by subjecting the foregoing pro-expanded particles to in-mold expansion-molding had a surface specific resistance of $2.0\times10^{12}$ $\Omega/cm^2$ which is high. Further, since contraction and fusion failure occurred thereto, the molded article had poor surface appearance. Still further, the molded article had stickiness on surfaces, and caused contamination.

Comparative Example 4

Pre-expanded particles having an expansion ratio of 13.0 times and a DSC ratio of 30 % were obtained by the same method as that of Example 1 except that 5.0 parts by weight of "ATMER163" (alkyldiethanolamine) produced by Chiba Specialty Chemicals Co., Ltd. as an anti-static agent was added. A molded article obtained by subjecting the foregoing pre-expanded particles to in-mold expansion-molding had a surface specific resistance of $1.8 \times 10^{12}$ $\Omega/cm^2$, which is high. Further, since contraction and fusion failure occurred thereto, the molded article had poor surface appearance. Still further, the molded article had stickiness on surfaces, and caused contamination.

Industrial Applicability

The present invention is capable of providing pre-expanded noncrosslinked polypropylene-based resin particles that exhibit an excellent anti-static property, and an in-mold expansion-molded article exhibiting an excellent anti-static property and being much less contaminating, obtained from the foregoing pre-expanded noncrosslinked polypropylene-based resin particles. Therefore, an expansion-molded article obtained is useful as cushioning packaging materials, returnable boxes, etc.

**Claims**

1. Pro-expanded noncrosslinked polypropylene-based resin particles comprising a noncrosslinked polypropylene-based resin composition that contains 1 wt% to 30 wt% of an ion-conducting polymer-type anti-static agent that is made of an amphiphilic block copolymer and contains an alkali metal salt of a a fluoroalkylsulfonic acid.

2. The pre-expanded noncrosslinked polypropylene-based resin particles according to claim 1, wherein a hydrophobic part of the amphiphilic block copolymer is an olefin-based polymer, and a hydrophilic part of the same is an ether-based polymer.

3. The pre-expanded noncrosslinked polypropylene-based resin particles according to claim 1 or 2, wherein the alkali metal salt of a fluoroalkylsulfonic acid is expressed by the following formula (1) or (2):

$$(CF_3SO_3)_2NLi \qquad (1)$$

$$CF_3SO_3Li \qquad (2)$$

4. The pre-expanded noncrosslinked polypropylene-based resin particles according to any one of claims 1 to 3, wherein the ion-conducting polymer-type anti-static agent contains the alkali metal salt of a fluoroalkylsulfonic acid at a ratio of 0.01 to 50 parts by weight with respect to 100 parts by weight of the amphiphilic block copolymer.

5. The pre-expanded noncrosslinked polypropylene-based resin particles according to any one of claims 1 to 4, wherein a DSC ratio obtained by differential scanning calorimetry (DSC) is in a range of 10 % to 70 %, the DSC ratio being expressed by the following form ula (3):

$$\text{DSC ratio (\%)} = 100 \times (\beta/(\alpha+\beta)) \ ... \ (3)$$

where $\alpha$ (J/g) is the amount of heat of fusion at a fusion peak based on crystal that the substrate resin of the pre-expanded noncrosslinked polypropylene- based resin particles had inherently, and $\beta$ (J/g) is the amount of heat of fusion at a fusion peak appearing on a higher temperature side relative to the peak for $\alpha$.

6. A method for producing an in-mold expansion-molded article of a noncrosslinked polypropylene-based resin, the method comprising the step of filling the pre-expanded noncrosslinked polypropylene-based resin particles according to any one of claims 1 to 5 into a mold capable of being closed but incapable of being hermetically sealed, and heating the same with water vapor so that the particles are molded.

7. An in-mold expansion-molded article of a non-crosslinked polypropylene-based resin obtained by the method according to claim 6.

# EP 2 103 647 B1

**Patentansprüche**

1. Vorexpandierte Teilchen aus Harz auf der Basis von unvemetztem Polypropylen, umfassend eine Harzzusammensetzung auf der Basis von unvemetztem Polypropylen, welche 1 Gew.% bis 30 Gew.% eines ionenleitenden Antistatikmittels vom Polymertyp, welches aus einem amphiphilen Blockcopolymer hergestellt ist und ein Alkalimetallsalz einer Fluoralkylsulfonsäure enthält, umfasst.

2. Die vorexpandierten Teilchen aus Harz auf der Basis von unvernetztem Polypropylen gemäß Anspruch 1, wobei ein hydrophober Teil des amphiphilen Blockcopolymers ein Olefin-basiertes Polymer ist, und ein hydrophiler Teil desselben ein Ether-basiertes Polymer ist.

3. Die vorexpandierten Teilchen aus Harz auf der Basis von unvemetztem Polypropylen gemäß Anspruch 1 oder 2, wobei das Alkalimetallsalz einer Fluoralkylsulfonsäure durch die folgende Formel (1) oder (2) dargestellt ist:

$$(CF_3SO_2)_2NLi \qquad (1)$$

$$CF_3SO_3Li \qquad (2).$$

4. Die vorexpandierten Teilchen aus Harz auf der Basis von unvemetztem Polypropylen gemäß einem der Ansprüche 1 bis 3, wobei das ionenleitende Antistatikmittel vom Polymertyp das Alkalimetallsalz einer Fluoralkylsulfonsäure in einem Verhältnis von 0,01 bis 50 Gewichtsteile in Bezug auf 100 Gewichtsteile des amphiphilen Blockcopolymers enthält.

5. Die vorexpandierten Teilchen aus Harz auf der Basis von unvernetztem Polypropylen gemäß einem der Ansprüche 1 bis 4, wobei das DSC-Verhältnis, erhalten durch Differential-Scanning-Kalorimetrie (DSC) in einem Bereich von 10% bis 70% liegt, wobei das DSC-Verhältnis durch die folgende Formel (3) dargestellt wird:

$$\text{DSC-Verhältnis (\%)} = 100 \times (\beta/(\alpha+\beta)) \qquad (3)$$

wobei $\alpha$ (J/g) die Menge an Schmelzwärme bei einem Schmelzpeak basierend auf Kristall ist, das das Substratharz der vorexpandierten Teilchen aus Harz auf der Basis von unvemetztem Polypropylen inhärent besaß, und $\beta$ (J/g) die Menge an Schmelzwärme an einem Schmelzpeak ist, der bei einer höheren Temperatur relativ zu dem Peak für $\alpha$ erscheint.

6. Ein Verfahren zur Herstellung eines in einer Form expansionsgeformten Gegenstands aus Harz auf der Basis von unvemetztem Polypropylen, wobei das Verfahren den Schritt des Füllens der vorexpandierten Teilchen aus Harz auf der Basis von unvemetztem Polypropylen, gemäß einem der Ansprüche 1 bis 5, in eine Form die geschlossen werden kann, jedoch nicht hermetisch abgedichtet werden kann, umfasst, und Erwärmen derselben mit Wasserdampf, sodass die Teilchen geformt werden.

7. Ein in einer Form expansionsgeformter Gegenstand eines Harz auf der Basis von unvemetztem Polypropylen, erhalten durch das Verfahren gemäß Anspruch 6.

**Revendications**

1. Particules pré-expansées de résine à base de polypropylène non réticulé, comprenant une composition de résine à base de propylène non réticulé qui contient 1 % en poids à 30 % en poids d'un agent anti-statique de type polymère conducteur d'ions qui est constitué d'un copolymère bloc amphiphile et contient un sel de métal alcalin d'un acide fluoroalkylsulfonique.

2. Particules pré-expansées de résine à base de polypropylène non réticulé selon la revendication 1, dans lesquelles une partie hydrophobe du copolymère bloc amphiphile est un polymère à base d'oléfine et une partie hydrophile de celui-ci est un polymère à base d'éther.

3. Particules pré-expansées de résine à base de polypropylène non réticulé selon la revendication 1 ou 2, dans lesquelles le sel de métal alcalin d'un acide fluoroalkylsulfonique est exprimé par la formule (1) ou (2) suivante :

$$(CF_3SO_2)_2NLi \qquad (1)$$

$$CF_3SO_3Li \qquad (2)$$

4. Particules pré-expansées de résine à base de polypropylène non réticulé selon l'une quelconque des revendications 1 à 3, dans lesquelles l'agent anti-statique de type polymère conducteur d'ions contient le sel de métal alcalin d'un acide fluoroalkylsulfonique en une proportion de 0,01 à 50 parties en poids par rapport à 100 parties en poids du copolymère bloc amphiphile.

5. Particules pré-expansées de résine à base de polypropylène non réticulé selon l'une quelconque des revendications 1 à 4, dans lesquelles un ratio DSC obtenu par calorimétrie différentielle à balayage (DSC) est dans une plage allant de 10 % à 70 %, le ratio DSC étant exprimé par la formule suivante (3) :

$$\text{ratio DSC (\%)} = 100 \text{ x } (\beta/(\alpha+\beta)) \qquad \ldots\ldots\ldots..(3)$$

où $\alpha$ (J/g) est la quantité de chaleur de fusion à un pic de fusion sur la base du cristal que possède de manière inhérente la résine substrat des particules pré-expansées de résine à base de polypropylène non réticulé, et $\beta$ (J/g) est la quantité de chaleur de fusion à un pic de fusion apparaissant sur un côté de température supérieure par rapport au pic pour $\alpha$.

6. Procédé de production d'un article moulé par expansion dans un moule de résine à base de polypropylène non réticulé, le procédé comprenant l'étape de chargement des particules de résine pré-expansées à base de polypropylène non réticulé selon l'une quelconque des revendications 1 à 5 dans un moule pouvant être fermé mais ne pouvant pas être hermétiquement scellé, et de chauffage de celui-ci avec de la vapeur d'eau de sorte que les particules soient moulées.

7. Article moulé par expansion dans un moule de résine à base de polypropylène non réticulé obtenu par le procédé selon la revendication 6.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62153326 A
- JP 50029740 B
- JP 2005330417 A
- JP 51022951 B
- US 3953558 A
- JP 53033996 B